# EUROPÄISCHE PATENTSCHRIFT

(11) **EP 0 427 967 B1**
(45) Veröffentlichungstag und Bekanntmachung des Hinweises auf die Patenterteilung: **14.02.1996**
(21) Anmeldenummer: 90119722.8
(22) Anmeldetag: 15.10.1990
(51) Int. Cl.: F16C 35/06, F16C 25/06, F16B 39/10, B41F 13/26

(54) **Lageranordnung mit einer Sicherungseinrichtung für einen Stellring**
Bearing arrangement with a locking device for an adjusting ring
Palier avec dispositif de serrage pour un anneau de réglage

(30) Priorität: 14.11.1989 DE 3937788
(43) Veröffentlichungstag der Anmeldung: 22.05.1991
(73) Patentinhaber: Heidelberger Druckmaschinen Aktiengesellschaft, D-69019 Heidelberg (DE)
(72) Erfinder: Hiltwein, Hans-Peter, W-6833 Waghäusel 2 (DE)
(74) Vertreter: Stoltenberg, Baldo Heinz-Herbert

(56) Entgegenhaltungen:
- FR-A- 1 355 878
- US-A- 1 372 624
- US-A- 3 326 613

## Beschreibung

Die Erfindung betrifft eine Lageranordnung mit einem Ringlager, das an einem Gegenstück abgestützt ist, an welchem eine eine Symmetrieachse besitzende Aufnahme für das Ringlager vorgesehen ist, mit einem vom Gegenstück getragenen, bezüglich der Symmetrieachse axialen und zu dieser symmetrischen Anschlag für das Ringlager, einem mit einem Stellringgewinde versehenen Stellring, mittels welchem das Ringlager im montierten Zustand der Lageranordnung zwischen dem Anschlag und dem Stellring justiert ist, einem am Gegenstück ausgebildeten, zum Anschrauben des Stellrings vorgesehenen Gegengewinde und einem konzentrisch zur Symmetrieachse angeordneten Sicherungsteil, das im montierten Zustand gegen eine Verdrehung gegenüber dem Gegenstück bezüglich der Symmetrieachse gesichert am Gegenstück angeordnet ist und seinerseits den Stellring verdrehgesichert in einer Einstellposition hält.

Lageranordnungen dieser Art finden insbesondere Verwendung, wenn das Ringlager aus Lagerringen und Wälzkörpern besteht.

Im Stand der Technik ist ein mit einem Gewinde versehener Stellring beispielsweise als Mutter ausgebildet, deren Lage mit Hilfe einer Kontermutter gesichert werden soll (siehe "Die Gestaltung von Wälzlagern", Firmendruckschrift Kugelfischer Georg Schäfer & Co., Schweinfurt, Publ.-Nr. 00 200 DA - Ausgabe 1970, Seite 15). Zum Einstellen des Axialspiels eines Axiallagers wird hierbei die Mutter auf ein Gegenstück soweit aufgeschraubt bis ein vorgegebenes Axialspiel vorliegt. Eine Sicherung der Lage dieser Mutter erfolgt sodann durch Kontern mittels der Kontermutter. Beim Kontern einer Mutter tritt jedoch in deren Gewindeeingriff mit dem Gegenstück ein Flankenwechsel auf, der dazu führen kann, daß sich die Lage der gekonterten Mutter und damit das zuvor eingestellte Axialspiel verändert.

Eine andere bekannte Maßnahme zur Sicherung eines als Mutter ausgebildeten Stellrings besteht darin, in der Mutter eine quer zu ihrer Gewindebohrung verlaufende Gewindebohrung und eine hierin geführte Sicherungsschraube vorzusehen (siehe "Lagerungsbeispiele", Firmendruckschrift SKF, Dd 4605 A 1.66. Reg. 077 73, Seite 97). Hierbei wird beim Anziehen der Sicherungsschraube das in dessen Umgebung befindliche Gewinde der Mutter aus dem Gegengewinde herausgezogen. Eine derartige Deformation der Mutter kann aber an einem mittels der Mutter eingestellten Lagerring einen Planlauffehler verursachen.

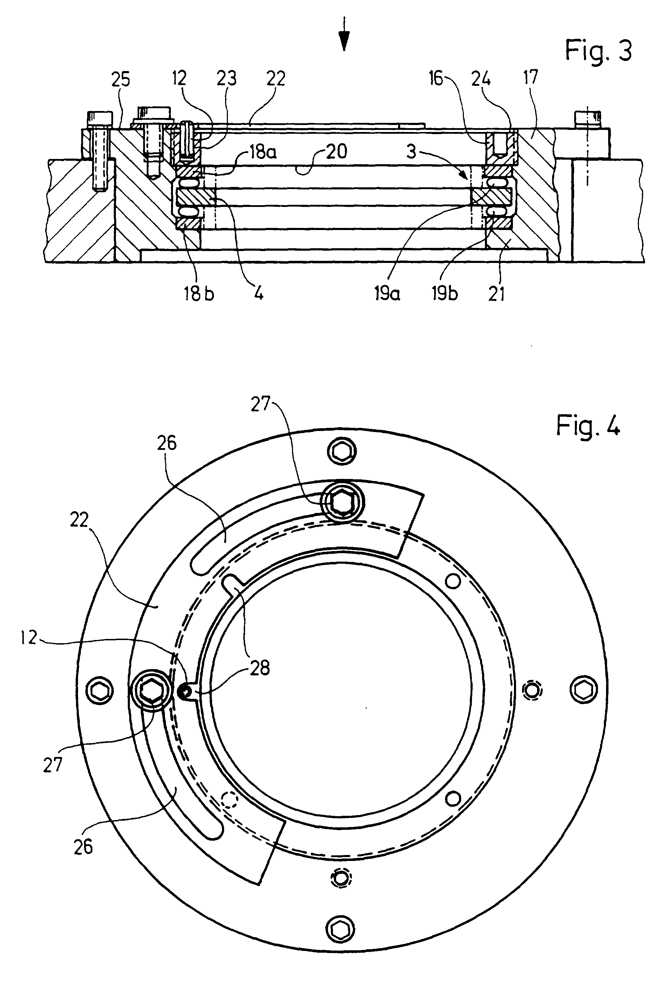

Weiterhin ist eine Sicherungseinrichtung für einen Stellring zur Einstellung eines Schrägkugellagers bekannt geworden, die eine gewisse Ähnlichkeit mit einer Sicherung mittels eines in eine Kronenmutter eingreifenden Splints aufweist; jedoch ist hierbei ein einem Splintloch entsprechendes Loch in einer Stellmutter vorgesehen, während den zum Eingriff eines Splints bestimmten Aussparungen einer Kronenmutter entsprechende Aussparungen im Mantel einer Hohlwelle vorgesehen sind und anstelle eines Splints eine im Splintloch befestigte Schraube vorgesehen ist, deren Kopf in eine der genannten Aussparungen hineinragt (siehe "Lagerungsbeipiele", Firmendruckschrift SKF, Dd 4605 A 1.66. Reg. 077 73, Seite 63, Fig. 3). Hiermit ist eine Sicherung des Stellrings nur in bestimmten Drehstellungen desselben gegenüber der Hohlwelle möglich. Diese Sicherungseinrichtung eignet sich daher nicht zu einer stufenlosen Einstellung eines Lagerspiels.

Aus der Druckschrift US-A-1 372 624 ist eine Lageranordnung der eingangs genannten Art bekannt. Hierbei ist im montierten Zustand ein Stellring mittels Indexierungsmitteln mit einem hierzu konzentrischen Sicherungsring gekoppelt, der mit einer daran ausgebildeten Nase in eine Längsnut eines als Wellenzapfen ausgebildeten Gegenstücks eingreift. Hiermit ist eine Sicherung des Stellrings, bedingt durch die Indexierungsmittel, ebenfalls nur in bestimmten Drehlagen des Stellrings möglich.

Dem Lagerspiel von beispielsweise Druckwerkszylindern einer Mehrfarbenrotationsdruckmaschine kommt insofern eine besondere Bedeutung zu, als damit Dubliererscheinungen verbunden sind. Eines der möglichen Einsatzgebiete der Erfindung liegt somit in der Lagerung von Druckwerkszylindern. Aus dem genannten Grunde möglicher Dubliererscheinungen werden insbesondere auch an Axiallager von Druckwerkszylindern hohe Anforderungen im Hinblick auf Spielfreiheit gestellt. Geringfügige am Umfang eines Axiallagers auftretende Unterschiede der axialen Anstellung von Lagerringen können nämlich einen Planlauffehler des Axiallagers zur Folge haben, der ein Oszillieren eines Druckwerkszylinders und damit Dubliererschelnungen hervorruft.

Aufgabe der Erfindung ist es, eine eingangs genannte Lageranordnung so auszubilden, daß eine Lagefixierung eines Stellrings eines Lagers möglich ist, ohne daß Planlauffehler verursacht werden.

Diese Aufgabe wird gemäß der Erfindung gelöst mit einer Lageranordnung nach Anspruch 1 bzw. Anspruch 2. Diesen beiden Lösungen ist gemeinsam, daß einem jeweiligen Stellring ein Sicherungsteil zugeordnet ist, welches ohne Rückwirkung auf das mittels des Stellrings justierte Ringlager an einem Gegenstück fixierbar ist.

Der ausschlaggebende Vorteil einer erfindungsgemäßen Sicherungseinrichtung liegt darin, daß der Stellring seinerseits ohne jegliche Verformung in justierbaren Lagen fixierbar ist.

Die Erfindung ist nachfolgend anhand von Zeichnungen von Ausführungsbeispielen näher erläutert. Hierin zeigt
- Fig.1: eine mit Indexierungsmitteln zwischen dem Stellring und dem Sicherungsteil ausgestattete Lageranordnung mit einem auf einen Lagerzapfen auf geschobenen Ringlager in einem Längsschnitt,
- Fig. 2: eine Ansicht in Richtung des Pfeils in Fig, 1.
- Fig. 3: eine mit Indexierungsmitteln zwischen dem Stellring und dem Sicherungsteil ausgestattete Lageranordnung mit einem in eine Lagerbuchse eingeschobenen Ringlager im Längsschnitt,
- Fig. 4: eine Ansicht in Richtung des Pfeils in Fig. 3,
- Fig. 5: eine Lageranordnung ohne Indexierungsmittel zwischen dem Stellring und dem Sicherungsteil mit einem in eine Lagerbuchse eingeschobenen Ringlager im Längsschnitt, wobei ein als radial federnder Sicherungsring ausgebildetes Sicherungsteil an einem zylindrischen Fortsatz der Lagerbuchse festklemmbar ist,
- Fig. 6: eine Lageranordnung ohne Indexierungsmittel zwischen dem Stellring und dem Sicherungsteil mit einem in eine Lagerbuchse eingeschobenen Ringlager im Längsschnitt, wobei ein als radial federnder Sicherungsring ausgebildetes Sicherungsteil durch Aufspreizen in einer Bohrung der Lagerbuchse festklemmbar ist,
- Fig. 7: eine Lageranordnung ohne Indexierungsmittel zwischen dem Stellring und dem Sicherungsteil mit einem in eine Lagerbuchse eingeschobenen Ringlager im Längsschnitt, wobei ein als radial federnder Sicherungsring ausgebildetes und durch Aufspreizen in einer Bohrung der Lagerbuchse festklemmbares Sicherungsteil gegenüber der Ausführungsform in Fig. 6 abgewandelte Mittel zum Aufspreizen aufweist.

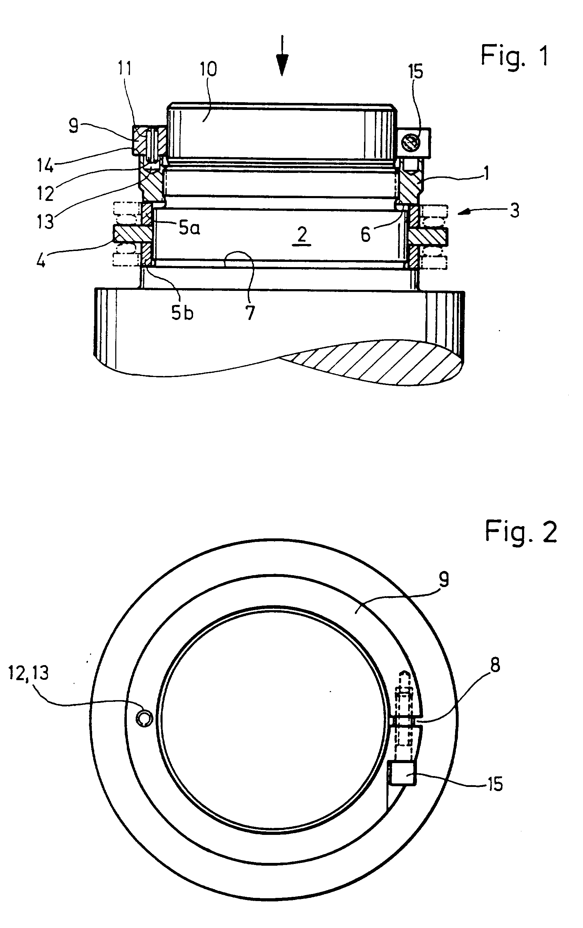

Bei der in Fig. 1 dargestellten Lageranordnung ist ein mit Innengewinde versehener Stellring 1 auf ein ein korrespondierendes Gegengewinde aufweisendes Gegenstück aufgeschraubt, welches als Lagerzapfen 2 ausgebildet ist. Auf den Lagerzapfen 2 ist ein Ringlager 3 in Form eines Axiallagers aufgeschoben. Hiervon sind ein mittlerer Lagerring 4 und je eine diesseits und jenseits desselben anliegende erste und zweite Stützhülse 5a und 5b zwischen einer ersten Stirnseite 6 des Stellrings 1 und einem als Wellenschulter des Lagerzapfens 2 ausgebildeten Anschlag 7 unter gegenseitiger Anlage von Stellring 1 und erster Stützhülse 5a, erster Stützhülse 5a und mittlerem Lagerring 4, mittlerem Lagerring 4 und zweiter Stützhülse 5b sowie zweiter Stützhülse 5b und Wellenschulter 7 mittels des Stellrings 1 justiert.

Zur Sicherung der dabei eingenommenen Lage des Stellrings 1 dient im vorliegenden Fall ein Sicherungsteil in Form eines mittels eines Schlitzes 8 radial federnd ausgebildeten Sicherungsrings 9. Dieser Sicherungsring 9 ist auf einem Absatz 10 des Lagerzapfens 2 aufgeschoben und hat eine Ausnehmung 11, In welche ein als Spannhülse 12 ausgebildetes Indexierungsteil eingepaßt ist. Die Spannhülse 12 ist dabei parallel zur Längsachse des Lagerzapfens 2 angeordnet und überragt eine dem Stellring 1 zugewandte Stirnseite des Sicherungsrings 9 und ist durch entsprechendes Verdrehen desselben gegenüber dem Lagerzapfen 2 und Aufschieben auf den Lagerzapfen 2 so positioniert, daß sie in eine an die Spannhülse 12 angepaßte Ausnehmung 13 in der der ersten Stirnseite 6 des Stellrings 1 gegenüberliegenden zweiten Stirnseite 14 des Stellrings 1 eintaucht.

In der solchermaßen eingenommenen Lage des Sicherungsrings 9 ist dieser mittels einer dem Schlitz 8 zugeordneten Spannschraube 15 auf dem Absatz 10 des Lagerzapfens 2 festgeklemmt. Damit ist zwischen dem Stellring 1 und dem seinerseits festgeklemmten Sicherungsring 9 eine formschlüssige Verbindung hergestellt, die ein selbsttätiges Verdrehen des Stellrings 1 gegenüber dem Lagerzapfen 2 verhindert.

Im dargestellten Beispiel der Fig. 1 liegt der Sicherungsring 9 zwar am Stellring 1 an; zwischen beiden kann jedoch ebensogut ein Spalt ausgebildet sein.

Bei gegenseitiger Anlage von Sicherungsring 9 und Stellring 1 kann andererseits auf ein gemeinsames Indexierungsteil verzichtet werden.

Bei der in Fig. 3 dargestellten Lageranordnung ist ein mit einem Außengewinde versehener Stellring 16 in ein ein korrespondierendes Gegengewinde aufweisendes Gegenstück eingeschraubt, welches als Lagerbuchse 17 ausgebildet ist. In die Lagerbuchse 17 ist ein Ringlager 3 in Form eines Axiallagers eingeschoben. Hiervon sind ein mittlerer Lagerring 4, je ein diesseits und jenseits desselben gelegener erster und zweiter Lagerring 18a und 18b und zwischen je einem Lagerring 18a bzw. 18b und dem mittleren Lagerring angeordnete erste und zweite Wälzkörper 19a und 19b zwischen einer ersten Stirnseite 20 des Stellrings 16 und einem als ringförmiger Fortsatz der Lagerbuchse 17 ausgebildeten Anschlag 21 unter gegenseitiger Anlage von Stellring 16 und erstem Lagerring 18a, erstem Lagerring 18a und ersten Wälzkörpern 19a, ersten Wälzkörpern 19a und mittlerem Lagerring 4, mittlerem Lagerring 4 und zweiten Wälzkörpern 19b, zweiten Wälzkörpern 19b und zweitem Lagerring 18b sowie zweitem Lagerring 18b und ringförmigem Fortsatz 21 der Lagerbuchse 17 mittels des Stellrings 16 justiert.

Zur Sicherung der dabei eingenommenen Lage des Stellrings 16 dient im vorliegenden Falle ein Sicherungsteil in Form eines Lochblechs 22, welches als Kreisringabschnitt ausgebildet ist.

Der Stellring 16 weist eine Ausnehmung 23 auf, in welche ein als Spannhülse 12 ausgebildetes Indexierungsteil eingepaßt ist. Die Spannhülse 12 ist dabei parallel zur Mittelachse der Lagerbuchse 17 angeordnet und überragt eine der ersten Stirnseite 20 des Stellrings 16 gegenüberliegende zweite Stirnseite 24 des Stellrings 16.

Das Lochblech 22 liegt auf einer die zweite Stirnseite 24 des Stellrings 16 überragenden Stirnfläche 25 der Lagerbuchse 17 auf und weist an die Spannhülse 12 angepaßte Ausnehmungen 28 sowie kreisbogenförmig verlaufende Schlitze 26 auf, welche konzentrisch zu den kreisringförmig verlaufenden Berandungen des Lochblechs 22 angeordnet sind. Die Schlitze 26 sind vorgesehen zum Druckgriff von Schrauben 27, mittels derer das Lochblech 22 an der Stirnfläche 25 der Lagerbuchse 17 befestigt ist, nachdem es durch entsprechendes Verdrehen um die Längsachse der Lagerbuchse 17 eine derartige Lage eingenommen hat, daß die den Stellring 16 überragende Spannhülse 12 in eine korrespondierende Ausnehmung 28 des Lochblechs 22 eingreift.

Damit ist zwischen dem Stellring 16 und dem Lochblech 22 eine formschlüssige Verbindung hergestellt, die ein selbsttätiges Verdrehen des Stellrings 16 gegenüber der Lagerbuchse 17 verhindert.

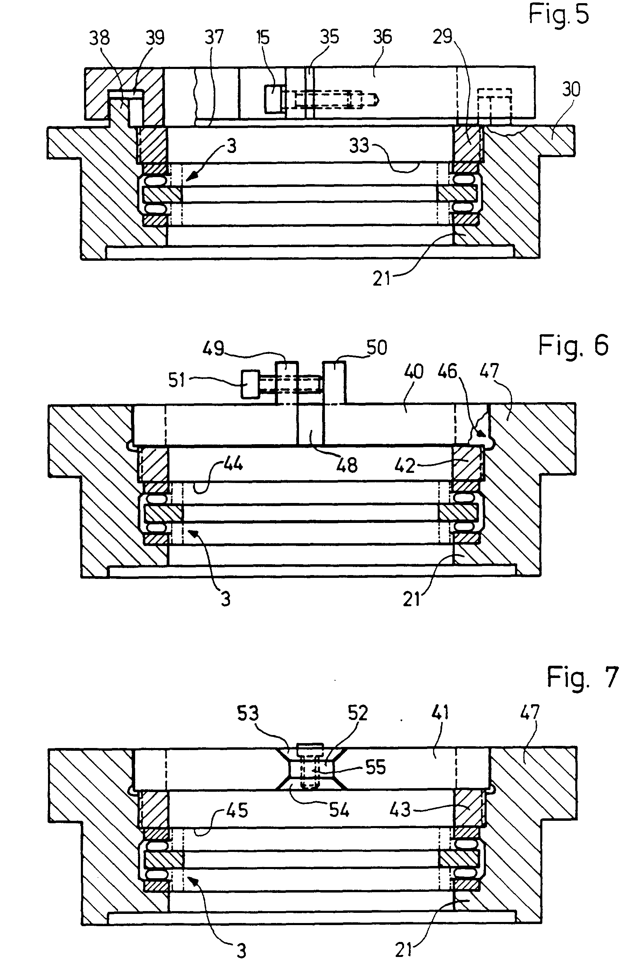

Das in Fig. 5 dargestellte Ausführungsbeispiel weist wiederum einen mit einem Außengewinde versehenen Stellring 29 auf, der in ein mit einem korrespondierenden Gegengewinde ausgestattetes Gegenstück eingeschraubt ist. Dieses Gegenstück kann als eine Lagerbuchse 30 betrachtet werden, in welcher ein nicht dargestellter Lagerzapfen unter Zwischenschaltung eines als Axiallager ausgebildeten Ringlagers 3 gelagert ist.

Das Ringlager 3 ist mittels des Stellrings 29 zwischen einer ersten Stirnseite 33 des Stellrings 29 und einem als ringförmiger Fortsatz der Lagerbuchse 30 ausgebildeten Anschlag 21 justiert.

Zur Sicherung der dabei eingenommenen Lage des Stellrings 29 dient hierbei wiederum ein mittels eines Schlitzes 35 radial federnd ausgebildeter Sicherungsring 36, dessen Schlitz 35 wiederum eine Spannschraube 15 zugeordnet ist. Eine der ersten Stirnseite 33 des Stellrings 29 gegenüberliegende zweite Stirnseite 37 des Stellrings 29 wird von einem zylindrischen Fortsatz 38 der Lagerbuchse 30 überragt. Der Sicherungsring 36 weist an seiner dem Stellring 29 zugewandten Seite eine Ringnut 39 auf. Der Sicherungsring 36 und die Außendurchmesser der Ringnut 39 und des zylindrischen Fortsatzes 38 sind so aufeinander abgestimmt, daß der Sicherungsring 36 gleitend über den zylindrischen Fortsatz 38 bis zur Anlage an dem Stellring 29 geschoben werden kann, ohne stirnseitig auf der Lagerbuchse 30 aufzusitzen. Die solchermaßen eingenommene Lage des Sicherungsrings 36 ist nunmehr mittels der Spannschraube 15 in gleicher Weise wie in Fig. 5 dargestellt fixierbar, so daß wiederum ein selbsttätiges Lösen des Stellrings 29 verhindert wird.

Die Figuren 6 und 7 stellen Ausführungsbeispiele mit einem mit Außengewinde versehenen Stellring dar, bei welchen ein geschlitzter Sicherungsring statt durch Zusammenziehen durch Aufspreizen an einem Gegenstück fixierbar ist.

Ein entsprechender Sicherungsring 40 bzw. 41 ist hierzu unter gleichzeitiger Anstellung an eine einer ersten Stirnseite 44 bzw. 45 eines Stellrings 42 bzw. 43 gegenüberliegende zweite Stirnseite in ein Bankett 46 eines Gegenstücks in Form einer Lagerbuchse 47 eingepaßt, welches dem zum Einschrauben des Stellrings 42 bzw. 43 bestimmten Gewinde in der Lagerbuchse 47 vorgelagert ist. Durch Spreizen eines entsprechenden Sicherungsrings 40 bzw. 41 wird dieser an seinem Umfang gegen die Wandung der das Bankett 46 bildenden Bohrung gedrückt.

Zum Spreizen des Sicherungsrings 40 (Fig. 6) sind im Bereich seines Schlitzes 48 Nasen 49 und 50 angebracht, welche mittels einer zwischen diesen wirkenden Spannschraube 51 auseinandergedrückt werden können. Zum Spreizen des Sicherungsrings 41 (Fig. 7) weist dessen Schlitz 52 an jeder Stirnseite des Sicherungsrings 41 eine keilförmige Erweiterung auf, in welche je ein Keil 53 und 54 eingesetzt ist. Die beiden Keile 53 und 54 sind mittels einer zwischen diesen wirkenden Spannschraube 55 aufeinander zu verschiebbar und bewirken hierbei eine Spreizung des Sicherungsrings 41.

### BEZUGSZEICHENLISTE

- 1: Stellring
- 2: Lagerzapfen
- 3: Ringlager
- 4: mittlerer Lagerring
- 5a,5b: Stützhülse
- 6: erste Stirnseite des Stellrings 1
- 7: Anschlag
- 8: Schlitz des Sicherungsrings 9
- 9: Sicherungsring
- 10: Absatz des Lagerzapfens 2
- 11: Ausnehmung des Sicherungsrings 9
- 12: Spannhülse
- 13: Ausnehmung des Stellrings 1
- 14: zweite Stirnseite des Stellrings 1
- 15: Spannschraube
- 16: Stellring
- 17: Lagerbuchse
- 18a,18b: Lagerring
- 19a,19b: Wälzkörper
- 20: erste Stirnseite des Stellrings 16
- 21: Anschlag
- 22: Lochblech
- 23: Ausnehmung des Stellrings 16
- 24: zweite Stirnseite des Stellrings 16
- 25: Stirnfläche der Lagerbuchse 17
- 26: Schlitz
- 27: Schraube
- 28: Ausnehmung des Lochblechs 22
- 29: Stellring
- 30: Lagerbuchse
- 33: erste Stirnseite des Stellrings 29
- 35: Schlitz des Sicherungsrings 36
- 36: Sicherungsring
- 37: zweite Stirnseite des Stellrings 29
- 38: zylindrischer Fortsatz der Lagerbuchse 30
- 39: Ringnut
- 40: Sicherungsring
- 41: Sicherungsring
- 42: Stellring
- 43: Stellring
- 44: erste Stirnseite des Stellrings 42
- 45: erste Stirnseite des Stellrings 43
- 46: Bankett
- 47: Lagerbuchse
- 48: Schlitz des Sicherungsrings 40
- 49: Nase
- 50: Nase
- 51: Spannschraube
- 52: Schlitz des Sicherungsrings 41
- 53: Keil
- 54: Keil
- 55: Spannschraube

## Patentansprüche

1. Lageranordnung mit einem Ringlager (3), das an einem Gegenstück (2, 17) abgestützt ist, an welchem eine eine Symmetrieachse besitzende Aufnahme für das Ringlager (3) vorgesehen ist, mit
- einem vom Gegenstück (2, 17) getragenen, bezüglich der Symmetrieachse axialen und zu dieser symmetrischen Anschlag (7, 21) für das Ringlager (3),
- einem mit einem Stellringgewinde versehenen Stellring (1, 16), mittels welchem das Ringlager (3) im montierten Zustand der Lageranordnung zwischen dem Anschlag (7, 21) und dem Stellring (1, 16) justiert ist,
- einem am Gegenstück (2, 17) ausgebildeten, zum Anschrauben des Stellrings (1, 16) vorgesehenen Gegengewinde
und
- einem konzentrisch zur Symmetrieachse angeordneten Sicherungsteil (9, 22), das im montierten Zustand gegen eine Verdrehung gegenüber dem Gegenstück (2, 17) bezüglich der Symmetrieachse gesichert am Gegenstück (2, 17) angeordnet ist und seinerseits den Stellring (1, 16) verdrehgesichert in einer Einstellposition hält,
**dadurch gekennzeichnet,**
daß das über Indexierungsmittel (11, 12, 13, 23, 28) mit dem in seiner Einstellposition befindlichen Stellring (1, 16) gekoppelte Sicherungsteil (9, 22) mittels einer kraftschlüssigen Verbindung (8, 15, 26, 27) am Gegenstück (2, 17) fixierbar ist.

2. Lageranordnung mit einem Ringlager (3), das an einem Gegenstück (2, 30, 47) abgestützt ist, an welchem eine eine Symmetrieachse besitzende Aufnahme für das Ringlager (3) vorgesehen ist, mit
- einem vom Gegenstück (2, 30, 47) getragenen, bezüglich der Symmetrieachse axialen und zu dieser symmetrischen Anschlag (7, 21) für das Ringlager (3),
- einem mit einem Stellringgewinde versehenen Stellring (1, 29, 42, 43), mittels welchem das Ringlager (3) im montierten Zustand der Lageranordnung zwischen dem Anschlag (7, 21) und dem Stellring (1, 29, 42, 43) justiert ist,
- einem am Gegenstück (2, 30, 47) ausgebildeten, zum Anschrauben des Stellrings (1, 29, 42, 43) vorgesehenen Gegengewinde
und
- einem konzentrisch zur Symmetrieachse angeordneten Sicherungsteil (9, 36, 40, 41), das im montierten Zustand gegen eine Verdrehung gegenüber dem Gegenstück (2, 30, 47) bezüglich der Symmetrieachse gesichert am Gegenstück (2, 30, 47) angeordnet ist und seinerseits den Stellring (1, 29, 42, 43) verdrehgesichert in einer Einstellposition hält,
**dadurch gekennzeichnet**, daß
- das Sicherungsteil (9, 36, 40, 41) in Form eines mittels eines Schlitzes (8, 35, 48, 52) radial federnd ausgebildeten Rings vorgesehen ist, der mittels Klemmitteln (15, 49, 50, 51, 53, 54, 55) radial verstellbar ist,
- das Sicherungsteil (9, 36, 40, 41) im montierten Zustand der Lageranordnung an eine dem Ringlager (3) abgewandte Stirnseite (14, 37) des Stellrings (1, 29, 42, 43) angestellt ist und mit Hilfe der Klemmittel (15, 49, 50, 51, 53, 54, 55) am Gegenstück (2, 30, 47) fixiert ist.

## Claims

1. Bearing arrangement having a ring bearing (3) which is supported against a counterpart (2, 17) on which there is provided a receiving fixture, possessing a symmetrical axis, for the ring bearing (3), having
- a stop (7, 21) for the ring bearing (3), which stop is borne by the counterpart (2, 17), is axially positioned with respect to the symmetrical axis and is symmetrical to this axis,
- an adjusting ring (1, 16), which is provided with an adjusting-ring thread and by means of which the ring bearing (3), in the fitted state of the bearing arrangement, is adjusted between the stop (7, 21) and the adjusting ring (1, 16),
- a counter-thread, which is configured on the counterpart (2, 17) and is provided for the screwing-on of the adjusting ring (1, 16),
and
- a securing part (9, 22), which is disposed concentrically to the symmetrical axis and, in the fitted state, is disposed on the counterpart (2, 17) such that it is secured against torsion relative to the counterpart (2, 17) with respect to the symmetrical axis and which, for its part, holds the adjusting ring (1, 16) torsionally secured in an adjustment position,
characterized in that the securing part (9, 22) coupled via indexing means (11, 12, 13, 23, 28) to the adjusting ring (1, 16) located in its adjustment position can be fixed by means of a non-positive connection (8, 15, 26, 27) to the counterpart (2, 17).

2. Bearing arrangement having a ring bearing (3) which is supported against a counterpart (2, 30, 47) on which there is provided a receiving fixture, possessing a symmetrical axis, for the ring bearing (3), having
- a stop (7, 21) for the ring bearing (3), which stop is borne by the counterpart (2, 30, 47), is axially positioned with respect to the symmetrical axis and is symmetrical to this axis,
- an adjusting ring (1, 29, 42, 43), which is provided with an adjusting-ring thread and by means of which the ring bearing (3), in the fitted state of the bearing arrangement, is adjusted between the stop (7, 21) and the adjusting ring (1, 29, 42, 43),
- a counter-thread, which is configured on the counterpart (2, 30, 47) and is provided for the screwing-on of the adjusting ring (1, 29, 42, 43),
and
- a securing part (9, 36, 40, 41), which is disposed concentrically to the symmetrical axis and, in the fitted state, is disposed on the counterpart (2, 30, 47) such that it is secured against torsion relative to the counterpart (2, 30, 47) with respect to the symmetrical axis and which, for its part, holds the adjusting ring (1, 29, 42, 43) torsionally secured in an adjustment position,
characterized in that
- the securing part (9, 36, 40, 41) is provided in the form of a ring which, by means of a slot (8, 35, 48, 52), is resiliently configured in the radial direction and which can be radially readjusted by means of clamping means (15, 49, 50, 51, 53, 54, 55),
- the securing part (9, 36, 40, 41), in the fitted state of the bearing arrangement, is placed against an end side (14, 37) of the adjusting ring (1, 29, 42, 43) facing away from the ring bearing (3) and is fixed by means of the clamping means (15, 49, 50, 51, 53, 54, 55) to the counterpart (2, 30, 47).

## Revendications

1. Système de palier comprenant un palier (3) qui prend appui contre une pièce complémentaire (2, 17) sur laquelle un logement ayant un axe de symétrie est prévu pour le palier (3), comprenant
- une butée (7, 21) destinée au palier (3), portée par la pièce complémentaire (2, 17), axiale par rapport à l'axe de symétrie et symétrique par rapport à celui-ci,
- une bague de réglage (1, 16) comportant des filets de vis de bague de réglage et à l'aide de laquelle le palier (3) est ajusté entre la butée (7, 21) et la bague de réglage (1, 16) à l'état de montage du système de palier,
- des filets de vis complémentaires réalisés sur la pièce complémentaire (2, 17) et prévus pour le vissage de la bague de réglage (1, 16)
et
une pièce d'arrêt (9, 22) disposée concentriquement à l'axe de symétrie, qui est disposée à l'état de montage en étant bloquée contre la pièce complémentaire (2, 17) par rapport à l'axe de symétrie et en étant empêchée de tourner par rapport à la pièce complémentaire (2, 17) et qui retient de son côté la bague de réglage (1, 16) à une position de réglage en l'empêchant de tourner,
caractérisé en ce que
la pièce d'arrêt (9, 22) accouplée par des moyens de mise au repère (11, 12, 13, 23, 28) à la bague de réglage (1, 16) se trouvant à sa position de réglage peut être fixée sur la pièce complémentaire (2, 17) par une liaison (8, 15, 26, 27) à transmission de force d'adhérence.

2. Système de palier comprenant un palier (3) qui prend appui sur une pièce complémentaire (2, 30, 47) sur laquelle un logement ayant un axe de symétrie et destiné au palier (3) est prévu, comprenant
- une butée (7, 21) destinée au palier (3), portée par la pièce complémentaire (2, 30, 47), axiale par rapport à l'axe de symétrie et symétrique par rapport à ce dernier,
- une bague de réglage (1, 29, 42, 43) comportant des filets de vis de bague de réglage et à l'aide de laquelle le palier (3) est ajusté entre la butée (7, 21) et la bague de réglage (1, 29, 42, 43) à l'état de montage du système de palier,
- des filets de vis complémentaires réalisés sur la pièce complémentaire (2, 30, 47) et prévus pour le vissage de la bague de réglage (1, 29, 42, 43)
et
- une pièce d'arrêt (9, 36, 40, 41) disposée concentriquement à l'axe de symétrie, qui est disposée à l'état de montage en étant arrêtée sur la pièce complémentaire (2, 30, 47) par rapport à l'axe de symétrie en étant empêchée de tourner par rapport à la pièce complémentaire (2, 30, 47) et qui retient de son côté la bague de réglage (1, 29, 42, 43) à une position de réglage en l'empêchant de tourner,
caractérisé en ce que
la pièce d'arrêt (9, 36, 40, 41) est prévue sous la forme d'une bague qui est réalisée de manière à être radialement élastique au moyen d'une fente (8, 35, 48, 52) et qui est déplaçable radialement au moyen d'organes de serrage (15, 49, 50, 51, 53, 54, 55),
- la pièce d'arrêt (9, 36, 40, 41) est placée à l'état de montage du système de palier contre un côté facial (14, 37) de la bague de réglage (1, 29, 42, 43) qui est tourné à l'opposé du palier (3) et elle est fixée sur la pièce complémentaire (2, 30, 47) à l'aide des organes de serrage (15, 49, 50, 51, 53, 54, 55).
